# EUROPEAN PATENT APPLICATION

(11) **EP 3 187 524 A1**
(43) Date of publication of application: **05.07.2017**
(21) Application number: 15202979.9
(22) Date of filing: 29.12.2015
(51) Int. Cl.: C08J 3/28, C08J 5/22, C08J 7/18

(54) **PROTON EXCHANGE MEMBRANE AND A METHOD FOR PREPARATION THEREOF**

(71) Applicant: Sabanci Üniversitesi, 34956 Istanbul (TR); Altinay Havacilik ve Ileri Teknolojiler San. Tic. A.S., 34906 Istanbul (TR)
(72) Inventor: SADEGHI, Sahl, 34956 Istanbul (TR); ISIKEL SANLI, Lale, 34956 Istanbul (TR); ALKAN GÜRSEL, Selmiye, 34956 Istanbul (TR); BAYAR, Kerim Can, 34957 Istanbul (TR)
(74) Representative: Sevinç, Erkan

(57) **Abstract**

The present invention proposes a method for preparation of a proton exchange membrane, the method including graft copolymerization of a base polymer with a graft into a graft copolymer in a reaction medium which is a solvent comprising an acid, said method comprising the steps of solving the base polymer and the graft in the reaction medium, thus obtainment of a reaction mixture; controlled heating the reaction mixture into a reaction temperature; and induction of graft copolymerization using radiation. The present invention further proposes a membrane obtained with such method.

## Description

### Technical Field of the Invention

The present invention relates to a proton exchange membrane and a method for preparation thereof.

### Background of the Invention

Two-step radiation induced graft copolymerization (e.g. that of styrene), has a shortcoming which can be described as incomplete sulfonation of grafted styrene end groups. For instance, in grafting styrene on an irradiated poly(vinylidene fluoride) (PVDF) for obtaining polystyrene sulfonic acid (PSSA) membrane, PVDF is first grafted by polystyrene (PS), and later due to a following sulfonation step, styrene end groups are functionalized as poly(styrene sulfonic acid) (PSSA). Consequently, at the end of the sulfonation, both PSSA and polystyrene (PS) grafts can coexist as end product. In this case, a graft copolymerization product with an acceptable purity, e.g. PSSA free from PS-related impurities is not available merely with the above mentioned process.

Additionally, using a reaction medium with a high reactivity in graft copolymerization, such as chlorosulfonic acid is not favorable due to the possibility of damage on base polymer. Therefore, either polymer degradation due to selected solvent and reaction medium, or low proton conductivity is faced in membrane production through graft copolymerization.

### Objects of the Invention

Primary object of the present invention is to overcome the abovementioned shortcomings of the prior art.

Another object of the present invention is to provide a method for obtainment of a membrane having high grafting level without compromising mechanical properties thereof.

Another object of the present invention is to provide a simple single-step method to obtain such membrane, wherein the substances to be grafted are used with high efficiency.

A further object of the present invention is to provide a simple method to obtain such membrane, wherein additives can be used without compromising the flexibility of the film formation process.

### Summary of the Invention

The present invention proposes a method for preparation of a proton exchange membrane, the method including graft copolymerization of a base polymer with a graft into a graft copolymer in a reaction medium which is a solvent comprising an acid, said method comprising the steps of solving the base polymer and the graft in the reaction medium, thus obtainment of a reaction mixture; controlled heating the reaction mixture into a reaction temperature; and induction of graft copolymerization using radiation. The present invention further proposes a membrane obtained with such method.

### Detailed Description of the Invention

The present invention proposes a proton exchange membrane having an optimized level of conductivity and mechanical strength and a method for preparation thereof. The method comprises graft copolymerization (grafting) using a base polymer which is preferably in powder form.

Dimethyl sulfoxide (DMSO) is preferred as solvent for providing a benign reaction medium which does not harm the substances to be grafted (i.e. free from polymer degradation), thanks to its low level of the reactivity. Thus, the substances to be grafted are used in an efficient way.

The graft copolymerization is induced by radiation; said induction is performed using gamma ray irradiation with ionizing radiation dose preferably within the range between 30 kGy and 70 kGy (kiloGreys, which corresponds to kilojoules of absorbed radiation energy per kilogram of matter absorbing the radiation), more preferably within the range between 45 kGy and 55 kGy.

The graft copolymerization is performed under acidic conditions preferably obtained with presence of sulfuric acid in the medium.

Preferred reaction temperature is within the range between 50°C and 90°C, more preferably within the range between 55°C and 65°C. In these temperatures, acceptable reaction rates can be achieved, where the reaction progress can also be kept under control. Furthermore, especially the more preferred range between 55°C and 65°C is clearly favorable in the sense of work safety.

Poly(vinylidene fluoride) (PVDF) as base polymer and sodium styrene sulfonate (SSS) as graft, were selected as substances to be used in graft copolymerization, for testing the performance (e.g. high graft levels) of the method according to the present invention. In this case, the graft level of the reaction product, which is PVDF-g-PSSS copolymer, was evaluated over the conductivity thereof e.g. in Siemens per meter (s/m) or millisiemens per centimeter (mS/cm).

For the grafting conditions employed in the method according to the present invention, optimum results (high graft levels) have been achieved without damaging the base polymer, by a preferred grafting time (reaction time) within the range between 30 minutes and 150 minutes; more preferably within the range between 30 minutes and 90 minutes, even more preferably within the range between 30 minutes to 60 minutes. This grafting time range is considered as appreciably short for obtaining high graft levels especially under controlled reaction conditions described above.

In an exemplary laboratory-scale trial described below, radiation induced graft copolymerization of sodium styrene sulfonate (SSS) onto poly(vinylidene fluoride) (PVDF) powder is performed. By giving said example, it is solely intended for providing a better understanding of the present invention and is as such not intended to define the scope of protection or the context in which said scope is to be interpreted in the absence of the description:

### EXAMPLE

PVDF and SSS were solved in DMSO in presence of sulfuric acid, and the grafting reaction is conducted under a reaction temperature of 60°C for 60 minutes, under gamma radiation with an ionizing radiation dose of 50 kGy . The initial concentration of SSS was selected as 1.5 moles per liter (M). Suitable SSS concentration for implementation of the method according to the present invention is within the range between 1 mol/liter and 2 mol/liter, preferably within the range between 1.25 mol/liter and 1.75 mol/liter, based on the volume of the reaction medium.

The resultant PVDF-g-PSSS copolymer is dissolved in a solution comprising dimethyl sulfoxide (DMSO), and then casted as thin films according to method according to the present invention, using of tape casting over a glass plate which in the laboratory scale provided a surface accuracy of 5 micron. Thus a membrane (product) is obtained. DMSO further serves as a sulfonation agent.

The (proton) conductivity of the product was measured as 80 mS/cm, which is considered as corresponding to a highly acceptable level of grafting achieved even in such short grafting time and low reaction temperature. Very high grafting levels usually cannot be accepted for use in membrane production, since when the grafting level is above an acceptable value, the mechanical properties of the membrane is compromised. Thus, the grafting level corresponding to 80 mS/cm in this case is also considered as within an optimum range where the mechanical properties such as mechanical strength of the membrane, are not compromised. The final product is machinable to an acceptable extent in terms of flexibility without being torn. Said extent, which is deducible for a skilled person in the art of filtration, corresponds to having a mechanical strength sufficient for montage of a membrane and use of it in filtration with common pressure differences applied on membranes used in micro- or ultrafiltration unit employed in chemical process industries, without damage.

The membrane was examined by NMR spectroscopy, and the examination results verified the grafting. The membrane was a cation exchange membrane which can be used as a substitute for e.g. Nafion^{®} membranes (especially comparable with Nafion^{®} NR212 in terms of proton conductivity and mechanical properties) in technical fields including fuel cells, electrochemical devices, chlor-alkali production, metal-ion recovery, water electrolysis, plating, surface treatment of metals, batteries, sensors, Donnan dialysis cells, drug release, gas drying or humidifaction, and superacid catalysis for the production of fine chemicals.

In the exemplary laboratory study described above, direct polymerization of sulfonated styrene monomer is hereby provided as a way for obtainment of higher sulfonated functional groups that has a direct effect on the proton conductivity. Moreover, the method used in here reduces the polymer damage, and production risk due to the simplified synthesis procedure. Furthermore, since it is possible to make a solution system out of PVDF-*g-*PSSS, it provides the possibility of using additives such as cross-linkers, plasticizers and nano-particles much easier and more homogeneously while maintaining the polymer film formation process flexible.

Furthermore, the above described PVDF-*g*-PSSS synthesis by means of PVDF base powder and irradiation graft copolymerization method, which can also be referred as single-step grafting polymerization, has the advantages of simplified synthesis process as well as reduced production cost in comparison with two-step graft copolymerization methods.

Thus the following objects are achieved by the present invention:
- the abovementioned shortcomings of the prior art are overcome;
- a method for obtainment of a membrane having high grafting level without compromising mechanical properties thereof, is provided;
- a simple single-step method to obtain such membrane, wherein the substances to be grafted are used with high efficiency, is provided;
- a simple method to obtain such membrane, wherein additives can be used without compromising the flexibility of the film formation process, is provided.

## Claims

1. A method for preparation of a proton exchange membrane, the method including graft copolymerization of a base polymer with a graft into a graft copolymer in a reaction medium which is a solvent comprising an acid, said method comprising the steps of:
- solving the base polymer and the graft in the reaction medium, thus obtainment of a reaction mixture;
- controlled heating the reaction mixture into a reaction temperature;
- induction of graft copolymerization using radiation.

2. Method according to the Claim 1, wherein the base polymer is poly(vinylidene fluoride)

3. Method according to any one of the Claims 1 and 2, wherein the graft is sodium styrene sulfonate preferably having a concentration within the range between 1 mol/liter and 2 mol/liter, preferably within the range between 1.25 mol/liter and 1.75 mol/liter, based on the volume of the reaction medium.

4. Method according to any one of the Claims 1 to 3, wherein the base polymer is in powder form.

5. Method according to any one of the Claims 1 to 4, wherein the solvent is dimethyl sulfoxide.

6. Method according to any one of the Claims 1 to 5, wherein the induction of graft copolymerization is performed using gamma ray irradiation with ionizing radiation dose within the range between 30 kGy and 70 kGy, preferably within the range between 45 kGy and 55 kGy.

7. Method according to any one of the Claims 1 to 6, wherein the acid is sulfuric acid.

8. Method according to any one of the Claims 1 to 7, wherein the graft copolymerization is performed under a reaction temperature within the range between 50°C and 90°C, more preferably within the range between 55°C and 65°C.

9. Method according to any one of the Claims 1 to 8, wherein the graft copolymerization is conducted with a reaction time within the range between 30 minutes and 150 minutes; more preferably within the range between 30 minutes and 90 minutes, even more preferably within the range between 30 minutes to 60 minutes.

10. Method for preparation of a membrane, comprising dissolving of the product obtained according to any one of the Claims 1 to 9 in a solvent, followed by casting thereof as a thin film.

11. Method according to the Claim 10, wherein the solvent comprises dimethyl sulfoxide.

12. A membrane obtained using the method according to any one of the Claims 10 and 11.
